**Europäisches Patentamt**

**European Patent Office**

**Office européen des brevets**

(19)

(11) Publication number : **0 442 760 B1**

## (12) EUROPEAN PATENT SPECIFICATION

(45) Date of publication of patent specification :
20.04.94 Bulletin 94/16

(51) Int. Cl.⁵ : **H01F 10/12, H01F 10/08, G11B 5/31, G11B 5/147, G11B 5/187**

(21) Application number : **91301266.2**

(22) Date of filing : **18.02.91**

(54) **Soft magnetic alloy films and magnetic heads using the same.**

(30) Priority : **16.02.90 JP 36465/90**
**21.02.90 JP 39975/90**

(43) Date of publication of application :
**21.08.91 Bulletin 91/34**

(45) Publication of the grant of the patent :
**20.04.94 Bulletin 94/16**

(84) Designated Contracting States :
**DE FR GB**

(56) References cited :
**EP-A- 0 002 712**
**EP-A- 0 286 124**
**EP-A- 0 288 316**
**EP-A- 0 373 615**
**EP-A- 0 380 136**

(73) Proprietor : **MATSUSHITA ELECTRIC INDUSTRIAL CO., LTD**
**1006, Oaza Kadoma, Kadoma-shi**
**Osaka 571 (JP)**

(72) Inventor : **Satomi, Mitsuo**
**52-4, Kisabe 6-chome**
**Katano-shi, Osaka (JP)**
Inventor : **Sakakima, Hiroshi**
**28-15, Katahokohon-machi**
**Hirakata-shi, Osaka (JP)**
Inventor : **Ihara, Keita**
**1-307, Myokenzaka 5-chome**
**Katano-shi, Osaka (JP)**
Inventor : **Osano, Koichi**
**2-4-302, Kamotanidai 3-chome**
**Sakai-shi, Osaka (JP)**

(74) Representative : **Myerscough, Philip Boyd**
**J.A. KEMP & CO. 14 South Square Gray's Inn**
**London WC1R 5LX (GB)**

## Description

This invention relates to a soft magnetic alloy film of type which contains nitrogen and has an axis of easy magnetization in a certain direction and also to thin film magnetic heads such as a magnetic head for video tape recorders using the soft magnetic alloy film.

A recent trend toward a high degree of recording density demands magnetic head core materials which have high magnetic permeability and high saturation magnetization. To this end, there have been developed thin films of metal materials such as amorphous alloys and Sendust alloys (Fe-Si-Al alloys) instead of conventionally employed ferrites.

EP-A-2712 discloses an amorphous metal film comprising a nitrogen containing alloy which contains a transition metal element selected from Cr, Fe, Co and Ni and a glass-forming element selected from B, Si, Al, C and B. The alloy contains at least 1 atom percent nitrogen.

For the fabrication of magnetic heads, importance is placed on reliability of the heads by strongly bonding magnetic gap portions with adhesive glass compositions. Adhesive glass compositions exhibiting high adhesion strength have generally high melting points, so that the soft magnetic alloy film having high saturation magnetization should have good thermal stability in order not to impede soft magnetic characteristics when subjected to high thermal treating temperatures.

As a soft magnetic alloy film having high saturation magnetization and good thermal stability, there have been proposed and expected as useful single-layered nitride alloy films or compositionally modulated nitride alloy films wherein the content of nitrogen along the thickness of the film is varied or modulated, both of which are obtained by a sputtering procedure wherein nitrogen gas is fed to a sputtering gas atmosphere continuously or intermittently. The procedure and such alloy films as mentioned above are disclosed, for example, in Japanese Laid-open Patent Application Nos. 61-54054, 61-199631 and 62-89402 and also in United States Patent No. 4,904,543.

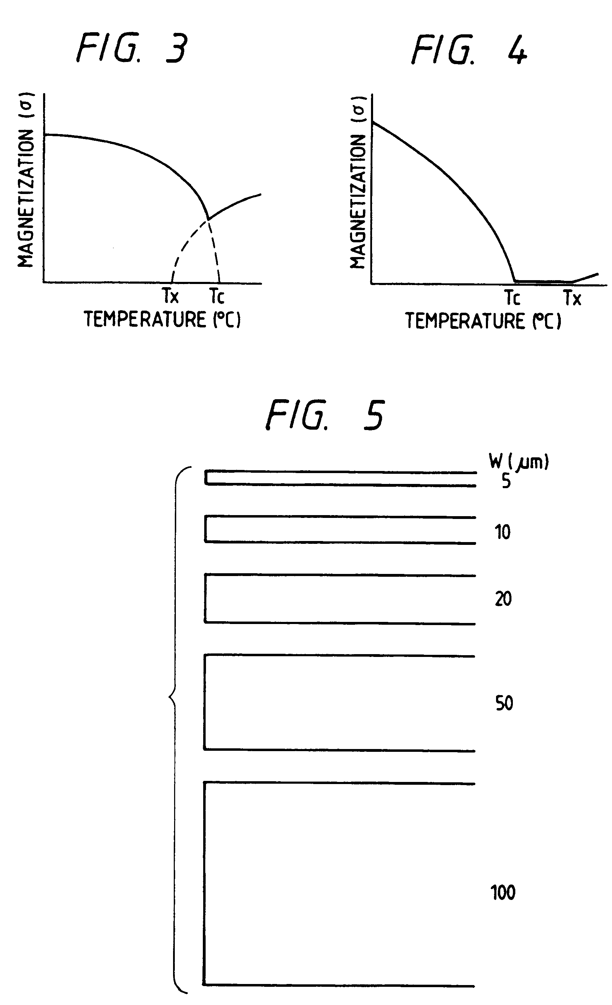

On the other hand, importance is also placed on magnetic permeability of the soft magnetic alloy film for the magnetic head particularly in a high frequency range of, for example, not less than 10 MHz as a result of the tendency toward the high degree of recording density. With amorphous alloys, high magnetic permeability is attained by a method wherein the alloy film is thermally treated at a temperature in the range between a temperature at which the film is demagnetized, i.e. a Curie temperature, $T_c$, and a crystallization temperature, $T_x$, as is particularly shown in Fig. 4, thereby eliminating anisotropy in the film to obtain a magnetically isotropic film. With materials whose $T_c$ and $T_x$ are reversed as shown in Fig. 3, there is known a method for obtaining a magnetically isotropic film wherein a sputtered film is subjected to thermal treatment in a rotating magnetic field. It is also known that when thermally treated in a fixed magnetic field in the above temperature range, the resultant film has anisotropy in one in-plane direction of the film.

With a ring-shaped magnetic head, when a magnetic film having an axis of easy magnetization in a given direction is employed, it is essential that an axis of easy magnetization and an axis of difficult magnetization exist in all closed magnetic paths, eventually making it difficult to obtain satisfactory characteristics. This is why an isotropic film free of any anisotropy has now been used for this purpose. In this connection, however, if the axis of easy magnetization is present in the direction vertical to the film surface of a ring-shaped magnetic head, the axis of difficult magnetization can be used evenly relative to all the closed magnetic paths, with the possibility that the head characteristics can be drastically improved. However, when known amorphous alloy films are thermally treated in a desired temperature range in a fixed magnetic field along a direction vertical to the surface of the magnetic film, the film is so thin that the demagnetizing factors increase. Thus, it is not possible to obtain a magnetic film having an axis of easy magnetization vertical to the film surface.

On the other hand, with thin film magnetic heads, Permalloy (Ni-Fe) has been conventionally employed as a core material for thin film magnetic heads. There is a demand for materials which have better saturation magnetization and wear resistance. Because of the difficulty in properly controlling magnetic anisotropy, a Sendust film has not been used yet as a thin film magnetic head.

When an amorphous alloy film is thermally treated at a temperature not higher than $T_c$ while fixing a magnetic field in the film, the resultant film has an axis of easy magnetization along the direction of the applied magnetic field. When combined with the thermal treatment in a rotating magnetic field, the magnitude of the an isotropic magnetic field can be controlled such as described in Japanese Patent Publication No. 62-9184. This enables one to impart a so-called stripe pattern often used in a thin film magnetic head with magnetic anisotropy in a specific in-plane direction of the pattern. At present, application of amorphous alloys to the thin film magnetic head is under development.

However, while the magnetic anisotropy of the amorphous alloy film can be controlled by the thermal treatment in a magnetic field, the anisotropy can be imparted only to the specific in-plane direction of the pattern. Accordingly, this magnetic anisotropy control technique is not effective in improving the characteristics of a ring-shaped magnetic head. In addition, amorphous alloys having high saturation magnetization are low in crystallization temperature and their magnetic characteristics are degraded when they are bonded with glass at a temperature of approximately 500°C.

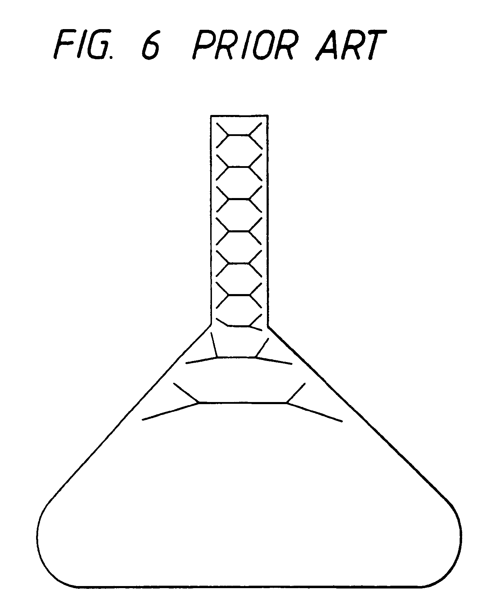

With a thin film magnetic head, when the width of a stripe pattern is small, closure domains appear, as shown in Fig. 6, for either the Permalloy alloy film or the amorphous alloy film. This will make it difficult to have a clear axis of easy magnetization along the width of the stripe pattern, with an attendant problem that the magnetic permeability along the length of the stripe pattern which is required as high in the thin film magnetic film is lowered. If there is used a soft magnetic film of a stripe pattern with a small width having an axis of easy magnetization in a direction vertical to the film surface, it will be expected that the magnetic permeability along the length of the stripe is improved. However, with known Permalloy or amorphous alloy films, it is not possible to have an axis of easy magnetization in the vertical direction relative to the film surface for the reason set forth above.

## SUMMARY OF THE INVENTION

It is accordingly an object of the invention to provide a soft magnetic alloy film which has an axis of easy magnetization in a direction vertical to the surface of the film.

It is another object of the invention to provide a nitrogen-containing soft magnetic alloy film wherein the concentration of nitrogen is compositionally modulated along the thickness of the film.

It is a further object of the invention to provide a ring-shaped magnetic head which comprises the soft magnetic alloy film whereby high permeability and high saturation magnetization are ensured.

It is a still further object of the invention to provide a magnetic head having a soft magnetic thin film in a stripe pattern whereby magnetic permeability of the film along the length of the respective stripes is significantly improved.

According to one embodiment of the invention, there is provided a soft magnetic alloy film which consists essentially of an average composition of the following formula (1)

$$T_a M_b X_c N_d \quad (1)$$

wherein T represents at least one metal selected from Fe, Co and Ni, M represents at least one metal selected from Nb, Zr, Ti, Ta, Hf, Cr, Mo, W and Mn, X represents at least one metalloid selected from the group consisting of B, Si, Ge and C, N is nitrogen, and a, b, c and d are, respectively, such values by atomic percent that

$$65 \leqq a \leqq 93 \quad (2)$$
$$0 < b \leqq 20 \quad (3)$$
$$0 < c \leqq 20 \quad (4)$$
$$1 \leqq d \leqq 20 \quad (5)$$
$$5 \leqq b + c \quad (6)$$
$$a + b + c + d = 100 \quad (7)$$

When the film of the above alloy is applied with a magnetic field in a direction vertical to the film surface and thermally treated at temperatures of not lower than 300°C for a time sufficient to cause a structural change of the alloy film, there can be obtained the alloy film which is imparted with magnetic anisotropy in the film in a direction perpendicular to the film. When the magnetic field is applied vertically to the film surface, it is possible to impart an axis of easy magnetization vertically to the film surface of the alloy film, resulting in high magnetic permeability. Once the magnetic anisotropy has been imparted, the film suffers little degradation of the magnetic permeability when re-heated in a magnetic field-free condition.

According to another embodiment of the invention, there is provided a magnetic head which comprises the soft magnetic film of the type defined above arranged as a part of magnetic paths forming a magnetic circuit of the head so that the axis of easy magnetization is vertical to the magnetic paths. For this purpose, the alloy film may be used as a core or yoke of the magnetic head.

When the soft magnetic alloy film is applied as a magnetic head in such a way that the axis of easy magnetization is vertical to magnetic paths constituting a magnetic circuit of the head, the axis of difficult magnetization is arranged to evenly correspond to the magnetic paths. Thus, high magnetic permeability is attained at a high frequency range, resulting a drastic improvement of the head characteristics.

Although the alloy film of the formula (1) exhibits high saturation magnetization, the magnetic characteristics are not degraded after the thermal treatment at high temperatures. Accordingly, bonding with a high strength glass becomes possible. When the film is applied as a core or yoke of a thin film magnetic head in the form of a stripe pattern by a usual manner, the axis of difficulty magnetization of the film corresponds evenly to the magnetic paths irrespective of the shape of the stripe pattern, leading to high magnetic permeability in the film. In addition, the alloy film has good frequency characteristics and, thus, the resulting thin film magnetic head exhibits remarkably improved head characteristics. In case where the width of the stripe pattern is narrow, any closure domain as shown in Fig. 6 is not produced since the axis of easy magnetization is kept vertical to the film surface, thus making it possible to obtain a thin film magnetic head with a narrow stripe pattern which has not been possible in prior art.

BRIEF DESCRIPTION OF THE DRAWINGS

Fig. 1 is a perspective view of a magnetic head according to one embodiment of the invention;
Fig. 2 is a graph showing the temperature dependence of magnetization of a soft magnetic alloy film according to the invention along with alloy films for comparison;
Figs. 3 and 4 are, respectively, a graph showing the temperature dependence of magnetization of known amorphous alloys;
Fig. 5 is a schematic view showing a stripe pattern of a thin film magnetic head according to the invention; and
Fig. 6 is a schematic view showing a tip portion of a thin film magnetic head and a closure domain structure involved in prior art heads.

DETAILED DESCRIPTION AND EMBODIMENTS OF THE INVENTION

The alloy film of the invention should have an average composition of the following formula (1)
$$T_aM_bX_cN_d \quad (1)$$
wherein the various symbols are as previously defined.

The values by atomic percent were experimentally determined. More particularly, when the alloy film is soft magnetic in nature, it is essential that the values of a and (b + c) be
$$a \leqq 94 \text{ and } 5 \leqq b + c \quad (8)$$
For imparting high saturation magnetization to the alloy. the values of a, b and c should be
$$65 \leqq a, b \leqq 20 \text{ and } c \leqq 20 \quad (9)$$
Moreover, a corrosion resistance is improved when the value of d is
$$1 \leqq d \quad (10)$$
In order to prevent nitrogen from dissociation from the alloy film during the course of thermal treatments.
$$4 \leqq b + c \quad (11)$$
Further, for preventing the alloy film from separating from a substrate while suppressing an internal stress of the film, the value of d should be
$$d \leqq 20 \quad (12)$$
Gathering the inequalities (8) to (12), the inequalities (2) to (7) are obtained.

The alloy film is formed by reactive sputtering under ordinary sputtering conditions in an atmosphere containing nitrogen as will be particularly described in examples and has usually a thickness of 0.1 to 50 $\mu$m when used as a single layer. The alloy film is preferably supported on a non-magnetic substrate such as $Mg_2TiO_4$ and glass ceramics.

In order to impart an axis of easy magnetization vertical to the film surface, the alloy film is subjected to thermal treatment at temperatures of not lower than 300°C which may vary depending on the type of alloy while applying a magnetic field in a direction vertical to the film surface. This thermal treatment is continued until a structural change inherent to the alloy film occurs, i.e. magnetic anisotropy appears in the film in a perpendicular direction. Usually, the time of the thermal treatment for this purpose is in the range of from 0.1 to 2 hours although depending on the intensity of the magnetic field applied. The magnetic field applied is generally in the range of from 0.5 to 20 A/m x $\frac{10^6}{4\pi}$ (KOe) and a fixed magnetic field is used for this purpose.

In order to more improve soft magnetic characteristics. the alloy film is compositionally modulated along the thickness of the film with respect to the concentration of nitrogen contained in the film. Most simply, the compositionally modulated film can be obtained by alternately superposing nitride alloy layers of TMXN and nitride-free alloy layers of TMX, wherein T, M, X and N have, respectively, the same meanings as defined in formula (1), by reactive sputtering of a target containing intended metals and metalloids defined before in the formula (1). For this purpose, when a nitride alloy layer is formed, nitrogen gas is introduced into a sputtering atmosphere. On the contrary, when a nitride-free alloy layer is formed, the introduction of the nitrogen gas is stopped. The resultant multi-layered film should preferably have at least two nitride alloy layers and at least two nitride-free layers alternately superposed.

The soft magnetic characteristics may be further improved by subjecting the superposed, multi-layered film to thermal treatment at temperatures of not lower than 300°C for 0.1 to 2 hours in order to facilitate the nitrogen to be compositionally modulated along the thickness of the film. This type of compositional modulation is described, for example, in United States Patent No. 4,904,543.

In the formula (1), the elements represented by M such as Nb, Zr, Ti, Ta and the like and the elements represented by X such as B, Si and the like have great bonding force with nitrogen. This is why nitrogen is not released from the film when the film is thermally treated at high temperatures, thus such elements contributing to stabilize the quality and characteristic properties of the film.

While the single-layered or multi-layered film of the invention is applied with a magnetic field substantially vertical to the film surface of the alloy, the film is thermally treated at temperatures of not lower than 300°C until a structural change inherent to the alloy film takes place. More particularly, the structural change is such that the film has an axis of easy magnetization vertical to the film surface and exhibits high magnetic permeability in the film as will not be attained by known magnetic materials used for the same purpose.

The nitride alloy film, whichever single-layered or multi-layered, is thermally stable unlike known amorphous alloy films, and can be thermally treated even at temperatures of not lower than 500°C, if desired. Moreover, as is different from known crystalline alloys such as Fe-Si-Al, the degree and magnitude of the anisotropy of the nitride alloy film are controllable by thermal treatment in a magnetic field. In addition, once magnetic anisotropy has been imparted by thermal treatment in a magnetic field at high temperatures, the magnetic anisotropy is not lost, unlike the case of amorphous alloy films, when subsequently thermally treated in a magnetic field-free condition, with little degradation of the magnetic permeability.

The single-layered or multi-layered soft magnetic alloy film of the invention is particularly suitable for use as magnetic heads including a ring-shaped magnetic head and a thin film magnetic head.

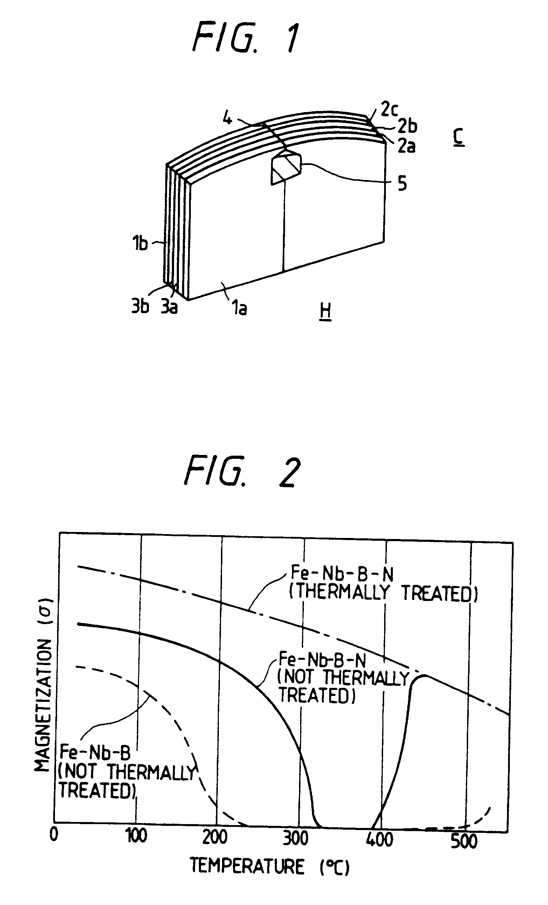

Reference is now made to the accompanying and particularly, to Fig. 1. Fig. 1 shows a typical magnetic head H of the built-up type which is arranged to provide a nitride alloy film of the invention as a part of magnetic paths of a magnetic circuit of the head. The magnetic head H includes non-magnetic substrates 1a, 1b, and a magnetic core C including nitride alloy sputtered layers 2a to 2c, and insulating layers 3a, 3b each provided between adjacent sputtered layers. Reference numeral 4 indicates a gap and reference numeral 5 is a a winding groove. The structure of the magnetic head H is known per se and the nitride alloy sputtered layers 2a to 2c may be any film of the invention described hereinbefore. For instance, the single-layered nitride alloy film which has thermally treated in a magnetic field as described before to make an axis of easy magnetization vertical to the film surface may be used. Alternatively, the multilayered film including nitrite alloy layers and nitride-free alloy layers which have been alternately superposed and subjected to thermal treatment in a magnetic field so that the film has an axis of easy magnetization in a direction vertical to the film surface.

Prior to or after the thermal treatment in a magnetic field, when the superposed layers are thermally treated to compositionally modulate the alloy with respect to the concentration of nitrogen along the thickness of the film, the soft magnetic characteristics of the multilayered film can be more improved. It will be noted that the soft magnetic alloy film should preferably be arranged in such a way that a flow of a magnetic flux from the magnetic head is vertical to the axis of the easy magnetization.

The non-magnetic substrates 1a, 1b may be made of any known material such as $Mg_2TiO_4$, glass ceramics, or the like. The insulating layer may be made of a heat-resistant material such as $SiO_2$, $Al_2O_3$, BN, AlN, or the like. In the figure, although the insulating layers 3a, 3b are used, a magnetic nitride alloy film as set out above may be used singly for this purpose.

The nitride alloy film is applicable to a thin film magnetic head which includes a magnetic core or yoke portion and a magnetic nitride alloy film of the invention formed on the yoke or core portion. In this case, the magnetic nitride alloy film may be a single-layered film or a multilayered film as discussed above. In addition, the alloy film may be built up alternately with an insulating film in a desired number as shown in Fig. 1.

The alloy films of the invention may be applied to magnetic heads other than those described above, e.g. the alloy film is effective when applied to a so-called metal-in-gap type magnetic head using a ferrite core wherein the alloy film is provided in or near a gap of the core.

The present invention is more particularly described by way of examples.

Example 1

Fe-Nb-B and Fe-Ta-B alloy sheets were, respectively, used as a target and sputtered in an Ar gas while periodically feeding nitrogen gas to the Ar gas to form compositionally modulated films on the respective non-magnetic glass ceramic substrates. These films were, respectively, made of Fe-Nb-B non-nitride layers/Fe-Nb-B-N nitride layers and Fe-Ta-B non-nitride layers/Fe-Ta-B-N nitride layers, and each film had a total thickness of about 2 $\mu$m with each layer thickness of about 10 nm (100 angstroms).

It will be noted that when the wavelength of compositional modulation in the compositionally modulated film is taken as the addition of one nitride layer thickness to one non-nitride layer thickness, this may be called compositional modulation cycle.

While changing a partial pressure of the nitrogen gas, there could be obtained compositionally modulated films with average compositions of $Fe_{78}Nb_8B_{12}N_2$, $Fe_{74}Nb_7B_{11}N_8$, $Fe_{70}Nb_6B_{10}N_{14}$ and $Fe_{78}Ta_4B_8N_{10}$. These films were subjected to determination of the relation between the thermal treatment and the magnetization.

In Fig. 2, there is shown the temperature dependence of the magnetization for the compositionally modulated film of $Fe_{78}Nb_8B_{12}N_2$ which was thermally treated at 550°C for one hour. For reference, the temperature dependence of a nitrogen-free single-layered amorphous film of Fe-Nb-B and the compositionally modulated film of $Fe_{78}Nb_8B_{12}N_2$ not thermally treated. As described above, the compositionally modulated film is a multilayered film composed of 10 nm (100 angstrom) thick nitride films and 10 nm (100 angstrom) thick non-nitride films with a wavelength of compositional modulation of 20 nm (200 angstroms).

The single-layered amorphous film of Fe-Nb-B, not thermally treated. has a Curie point of the amorphous phase in the vicinity of 200°C. The increase in the magnetization at about 450°C as shown in Fig. 2 indicates that a structural change such as crystallization takes place at the temperature. It is assumed that the structural change results in degradation of soft magnetic characteristics when the amorphous film is thermally treated at temperatures higher than 500°C.

On the other hand, with the Fe-Nb-B-N compositionally modulated film not thermally treated, it has a Curie point in the vicinity of 320°C and the magnetization increases at about 400°C. The increase of the magnetization is considered to be ascribed to a structural change occurring in the compositionally modulated film. Once thermally treated, the magnetization gently decreases with an increase of the temperature.

The demagnetization of the film becomes zero at temperatures higher than the Curie point, under which when a magnetic field is applied to the film in a direction vertical to the film surface and the film is thermally treated to a temperature at which the film structure is changed to develop magnetization, weak magnetic anisotropy appears in a direction vertical to the film surface, resulting in high magnetic permeability in the film. When the film which has been structurally changed is further thermally treated in a magnetic field-free condition, the axis of easy magnetization does not change to keep good soft magnetic characteristics.

The alloy films obtained above were then subjected to thermal treatment at 550°C for 30 minutes in a fixed magnetic field or in a rotating magnetic field applied in a direction vertical to the film surface, followed by punching in a troidal form to measure magnetic permeability. The thus measured samples were again subjected to further thermal treatment at 480°C for 1 hour in a magnetic field-free condition, after which magnetic permeability at 30 MHz was measured.

For comparison, the above procedure was repeated except that about 2 μm thick films of known amorphous alloys of $Co_{86}Nb_{10}Zr_4$ and $Fe_{80}Nb_8B_{12}$ were used and subjected to thermal treatment at temperatures not higher than 400°C because these alloys were cristallized when treated at 550°C or 480°C.

The results are shown in Table 1.

## Table 1

| Alloy | Manner of Application of Magnetic Field | Magnetic Permeability at 0.5 MHz | Magnetic Permeability at 30 MHz | Magnetic Permeability at 30 MHz after re-heat treatment in magnetic field-free condition |
|---|---|---|---|---|
| A $Fe_{78}Nb_8B_{12}N_2$ | rotating | 600 | 550 | 500 |
| | fixed | 1300 | 1180 | 1150 |
| B $Fe_{74}Nb_7B_{11}N_8$ | rotating | 800 | 700 | 600 |
| | fixed | 3000 | 2700 | 2650 |
| C $Fe_{76}Ta_4B_8N_{10}$ | rotating | 750 | 650 | 620 |
| | fixed | 2700 | 2600 | 2550 |
| D $Fe_{70}Nb_6B_{10}N_{14}$ | rotating | 800 | 750 | 650 |
| | fixed | 2000 | 1800 | 1800 |
| E known amorphous alloy $Co_{86}Nb_{10}Zr_4$ | rotating | 8000 | 750 | 600 |
| | fixed | 400 | 380 | 350 |
| F known amorphous alloy $Fe_{80}Nb_8B_{12}$ | rotating | 1000 | 800 | 500 |
| | fixed | 1000 | 850 | 450 |

As will be apparent from the results of Table 1, the known amorphous $Co_{86}Nb_{10}Zr_4$ film is turned into a magnetically isotropic film when thermally treated in the rotating magnetic field. Although the magnetic permeability at 0.5 MHz is high, the permeability at 30 MHz is low. This is considered as follows: because of the absence of any anisopropy, the frequency characteristics are lowered owing to the Snoek's limit.

With the known $Fe_{80}Nb_8B_{12}$ film, the permeabilities of the films obtained after the thermal treatment both in the rotating and fixed magnetic fields are not bad. However, when both films are again thermally treated in a magnetic field-free condition, the permeabilities are lowered.

In contrast, although the films of the invention are not high in the permeability when treated in the rotating magnetic fields, the films which were thermally treated in the fixed magnetic fields thereby imparting weak magnetic anisotropy in a direction vertical to the plane of the magnetic paths being measured exhibit high magnetic permeabilities exceeding the Snoek's limit. In addition, where the films are reheated in a magnetic field-free condition, the lowering of the permeability is only slight. Thus, it will be seen that when the films of the invention have once been thermally treated at appropriate temperatures while applying a magnetic field in a direction vertical to the film surface, the magnetic properties are not lost when the films are reheated in a magnetic field-free condition. This nature of the alloy film according to the invention is very effective for use as magnetic heads.

Although not shown in the table, when the films of the invention were reheated in a magnetic field-free condition at temperatures higher than the temperature used for the thermal treatment in the magnetic fields, any substantial change was not recognized except that a permeability in a high frequency rage was lowered slightly.

Example 2

Fe-Nb-C, Fe-Nb-Si and Fe-Ni-W-Nb-Ge, chips were, respectively, provided as a target and subjected to reactive sputtering in the same manner as in Example 1 to form on a non-magnetic substrate a compositionally modulated nitride alloy film consisting of nitride layers and non-nitride layers in a total layer thickness of 1.5 μm for all the cases. The wavelength of the compositional modulation and the content of nitrogen were varied by controlling the mixing cycle and the partial pressure of $N_2$ gas.

After sputtering. the resultant nitride alloy films were, respectively, subjected to thermal treatment in a fixed magnetic field in a vertical direction relative to the film surface in the same manner in Example 1 and to measurement of magnetic permeability at 30 MHz in the same manner as in Example 1. The results are shown in Table 2.

## Table 2

| Alloy | Wavelength of Compositional Modulation (angstroms) | Magnetic Permeability at 30 MHz | Magnetic Permeability at 30 MHz after re-heat treatment in magnetic field-free condition |
|---|---|---|---|
| G $Fe_{72}Nb_{11}C_9N_8$ | 300 | 1250 | 1200 |
|  | 400 | 1200 | 1150 |
| H $Fe_{72}Nb_{12}Si_8N_{10}$ | 300 | 1500 | 1450 |
|  | 600 | 1300 | 1220 |
| I $Fe_{72}Ni_{10}W_1Nb_{10}Ge_1N_6$ | 300 | 1300 | 1280 |
|  | 600 | 1250 | 1200 |

As will be apparent from the results of Table 2, the permeability is improved by nitridation and a greater effect is obtained at a greater content of nitrogen in the alloys in a certain range of the content. When the wavelength of the compositional modulation is too long, there is the tendency that the magnetic permeability is lowered.

Example 3

Fe-Ta-B and Fe-Nb-Si-B were, respectively, provided as a target and subjected to reactive sputtering in the same manner as in Example 2 wherein compositionally modulated alloy films consisting of nitride layers and non-nitride layers with a wavelength of compositional modulation of 20 nm (200 angstroms) and each film having a thickness of 3 μm were formed on a non-magnetic substrate through a $SiO_2$ insulating layer provided between adjacent alloy films to obtain a magnetic film in a total thickness of 9 μm on the non-magnetic substrate. Thereafter, the resultant core was thermally treated at 500°C in a magnetic field of $10^6/4\pi$ A/m (1000 Oe) in a direction vertical to the film surfaces and assembled according to a usual head-fabricating process to obtain a magnetic head of the respective compositions. Thus, a layer-built type of magnetic head of the type as shown in Fig. 1 was fabricated. For comparison, magnetic heads using cores with the same structure as set forth above which had been thermally treated while applying a rotating magnetic field in a direction parallel to the film surfaces or in a magnetic field-free condition were also subjected to the measurement of an output characteristic.

The results are shown in Table 3. It will be noted that the head output was measured under the same conditions of a track width of 9 μm, a gap length of 0.2 μm, a gap depth of 25 μm and a relative speed of a metal tape of 21 m/second, and a head output at 20 MHz is indicated as an index to an output of the head fabricated by thermal treatment in the rotating magnetic field in the parallel direction to the film surfaces, taken as zero.

Table 3

| Metal Core Material | Thermal Treatment in Magnetic Field in Vertical Direction to Film Surface | Thermal Treatment in Rotating Magnetic Field | Thermal Treatment in Magnetic Field-free Condition |
|---|---|---|---|
| J  $Fe_{74}Ta_6B_8N_{10}$ | +3 dB | 0 dB | -6 dB |
| K  $Fe_{66}Nb_6Si_4B_{12}N_{10}$ | +2 dB | 0 dB | -8 dB |

As will be apparent from the results of Table 3, the heads using the alloy films thermally treated in a magnetic field-free condition is lower in the output by about 6 to 8 dB than the heads using the alloy films thermally treated in the rotating magnetic field in the parallel direction to the film surfaces. The heads using the alloy film cores thermally treated in the fixed magnetic field in the vertical direction relative to the film surfaces are improved in the output characteristic by about 2 to 3 dB.

In the above example, the magnetic films used as the head core which had a total thickness of 9 μm through the $SiO_2$ insulating films are described. The thickness of the respective layers in the magnetic film may be properly selected depending on the track width and the frequency range used. In some case, a single-layered nitride film may be used. In this example, the magnetic nitride alloy film was applied with a magnetic field in a vertical direction to the film surfaces prior to fabrication of the head under which the film was thermally treated. If the application of the magnetic field is effected at an initial stage of thermal treatment of the head fabricating process, the head can be made by a currently employed head fabricating process without any further additional step.

Example 4

An Fe-Nb-B-Si alloy chip was provided as a target and subjected to reactive sputtering in an Ar gas atmosphere while periodically feeding $N_2$ gas to the atmosphere to form, on a non-magnetic substrate, a compositionally modulated film consisting of Fe-Nb-B-Si non-nitride layers and Fe-Nb-B-Si-N nitride layers each having a thickness of about 10 nm (100 angstroms) and having a total thickness of about 2 μm. The resultant alloy film had an average composition of $Fe_{72}Nb_6B_{10}Si_2N_{10}$.

The nitride alloy film formed on the non-magnetic substrate is amorphous at the time of the formation. When the film is thermally treated at high temperatures, a structural change takes place. The temperature depends on the type of alloy composition. With the alloy used above having a Curie point of about 320°C, the temperature at which the structural change occurs is about 400°C.

The demagnetizing field of the film becomes zero at temperatures higher than the Curie point. When the film is thermally treated to a temperature at which the film structure is changed to again develop magnetization while applying a magnetic field in a direction vertical to the film surface, weak magnetic anisotropy appears in the vertical direction, resulting in high magnetic permeability in the film. Once the structure has been changed, the axis of easy magnetization is not changed when the film is thermally treated in a magnetic field-free condition, keeping good soft magnetic characteristics.

The alloy film was used to make a stripe pattern having different track widths, w, as shown in Fig. 5 and subjected to measurement of magnetic permeability along the length thereof at 1 MHz. For comparison, a Co-Ta-Zr amorphous alloy film with a thickness of 1 μm which had been thermally treated in a magnetic field to impart uniaxial anisotropy to the film at right angles with respect to the lengthwise direction was subjected to measurement of magnetic permeability along the length. Further, these films were thermally treated at 500°C in a magnetic field-free condition and also subjected to measurement of magnetic permeability after the thermal treatment. The results are shown in Table 4

Table 4

|  | Fe-Nb-B-Si/Fe-Nb-B-Si-N | | | | | Co-Ta-Zr | | | | |
|---|---|---|---|---|---|---|---|---|---|---|
| W (μm) | 100 | 50 | 20 | 10 | 5 | 100 | 50 | 20 | 10 | 5 |
| After Formation | 2400 | 2400 | 2200 | 1900 | 1800 | 2000 | 2000 | 1800 | 1000 | 400 |
| After Thermal Treatment | 2200 | 2200 | 2000 | 1800 | 1700 | 400 | 300 | 200 | 100 | 100 |

As will be apparent from the above results, the alloy film of the invention is very effective when applied as a thin film head having a narrow track width. The magnetic anisotropy is not lost when the film is thermally treated in a magnetic field-free condition, thus ensuring stable magnetic permeability.

Example 5

Various targets were provided and were, respectively subjected to reactive sputtering to form, on a non-magnetic substrate, compositionally modulated nitride alloy films consisting of nitride layers and non-nitride layers. In all the cases, the total film thickness was 2 μm. The wavelength of the compositional modulation and the content of nitrogen were, respectively, 20 nm (200 angstroms) and 10%. Moreover, Fe-Ti and Fe-Zr alloys were, respectively, sputtered in an Ar gas mixed with $N_2$ gas to obtain single-layered nitride films. These films were thermally treated at temperatures of from 300 to 600°C while applying a fixed magnetic field in a vertical direction relative to the film surface in the same manner as in Example 4, followed by formation of a stripe pattern of each film as in Example 4 and subjecting to measurement of magnetic permeability along the length thereof. The results are shown in Table 5.

Table 5   Magnetic Permeability $\mu$ (1 MHz)

| Nitride Alloy Film | W (μm) | | |
|---|---|---|---|
| | 20 | 10 | 5 |
| Fe-Ta-B/Fe-Ta-B-N | 2400 | 2200 | 2000 |
| Fe-Nb-Si/Fe-Nb-Si-N | 1800 | 1700 | 1500 |
| Co-Mo-W-Zr/Co-Mo-W-Zr-N (Comparative) | 1200 | 1200 | 1000 |
| Fe-Ti-N (Comparative) | 1000 | 1000 | 900 |
| Fe-Zr-N (Comparative) | 1400 | 1400 | 1200 |

The results of the above table reveal that the alloy films of the invention are suitable for use as a narrow track thin film head. Moreover, the compositionally modulated films exhibit better magnetic permeability than the single-layered films. The Fe-based alloy films are higher in the magnetic permeability than the Co-based alloy film.

Example 6

The compositionally modulated nitride alloy film with a composition of Fe-Nb-B-Si/Fe-Nb-B-Si-N and the amorphous alloy film with a composition of Co-Ta-Zr obtained in Example 4 were, respectively, used to make a main magnetic pole of a single magnetic pole-type vertical magnetic head with a track width of 10 μm and a film thickness of 0.2 μm. The input and output characteristics of the respective heads were measured using a Co-Cr tape with a coercive force of $10^7/4\pi$ A/m (10000 Oe). As a result, it was found that in a recording wavelength range of from 10 to 0.5 μm, the head using the Fe-Nb-B-Si/Fe-Nb-B-Si-N alloy film of the invention was higher by about 5 dB than the head using the known amorphous Co-Ta-Zr alloy film with respect to the output characteristic.

**Claims**

1. A soft magnetic alloy film which comprises a layer of an alloy which consists essentially of an average composition of formula:

$$T_aM_bX_cN_d$$

wherein T represents at least one metal selected from Fe, Co and Ni, M represents at least one metal selected from Nb, Zr, Ti, Ta, Hf, Cr, Mo, W and Mn, X represents at least one metalloid selected from B, Si, Ge and C, N is nitrogen, and a, b, c and d have values, in atomic percent, such that

$$65 \leqq a \leqq 93$$
$$0 < b \leqq 20$$
$$0 < c \leqq 20$$
$$1 \leqq d \leqq 20$$
$$5 \leqq b + c$$
$$a + b + c + d = 100$$

said soft magnetic alloy film having an axis of easy magnetization in a direction perpendicular to the film surface.

2. A soft magnetic alloy film according to Claim 1, wherein the nitrogen in said film is compositionally modulated in the direction of the film thickness.

3. A soft magnetic alloy film according to claim 2, wherein said soft magnetic alloy film consists of nitride layers of a TMXN alloy and non-nitride layers of a TMX alloy, wherein T, M, X and N are as defined in claim 1, the nitride layers and the non-nitride layers being alternately superposed in order to compositionally modulate the nitrogen.

4. A soft magnetic alloy film according to any one of the preceding claims, wherein at least one metal represented by T is iron.

5. A soft magnetic alloy film according to any one of the preceding claims, which further comprises a non-magnetic substrate on which said soft magnetic alloy film is formed so that an axis of easy magnetization is perpendicular to the film surface.

6. A magnetic head (H) which comprises a magnetic film (2a, 2b, 2c) as part of a magnetic circuit, wherein the magnetic film is a soft magnetic alloy film as claimed in any one of the preceding claims.

7. A magnetic head (H) according to claim, wherein said part of the magnetic circuit has a structure comprising a plurality of said soft magnetic alloy films (2a - 2c) and a plurality of insulating films (3a, 3b) alternately superposed.

8. A magnetic head (H) according to claim 7, wherein the nitrogen is compositionally modulated in the direction of the film thickness in each of the plurality of soft magnetic alloy films (2a - 2c).

9. A magnetic head (H) according to claim 7 or 8, wherein each of the plurality of soft magnetic alloy films (2a - 2c) is formed on a non-magnetic support (1a, 1b) and each soft magnetic alloy film (2a - 2c) has an axis of easy magnetization in a direction perpendicular to the film.

10. A magnetic head (H) according to any one of claims 8 to 10, wherein said soft magnetic alloy film (2a, 2b, 2c) is arranged in such a way that a flow of a magnetic flux from said magnetic head (H) is perpendicular to the axis of easy magnetization.

**11.** A thin film magnetic head comprising a magnetic core having a yoke and a magnetic film formed on the core or yoke in a stripe pattern, wherein the magnetic film is a soft magnetic alloy film as claimed in any one of claims 1 to 5.

**12.** A thin film magnetic head according to claim 11 wherein, the magnetic film is present as a structure comprising a plurality of said soft magnetic alloy films and a plurality of insulating films alternately superposed.

**Patentansprüche**

**1.** Film aus einer weichmagnetischen Legierung, der eine Schicht aus einer Legierung aufweist, die im wesentlichen aus einer durchschnittlichen Zusammensetzung der Formel:

$$T_a M_b X_c N_d$$

besteht, wobei T wenigstens ein Metall darstellt, welches aus Fe, Co und Ni ausgewählt ist, M wenigstens ein Metall darstellt, welches aus Nb, Zr, Ti, Ta, Hf, Cr, Mo, W und Mn ausgewählt ist, X wenigstens ein Metalloid darstellt, welches aus B, Si, Ge und C ausgewählt ist, N für Stickstoff steht und a, b, c und d solche Werte in Atomprozent sind, daß

$$65 < a < 93$$
$$0 < b < 20$$
$$0 < c < 20$$
$$1 < d < 20$$
$$5 < b + c$$
$$a + b + c + d = 100 \text{ ist,}$$

und wobei der Film aus einer weichmagnetischen Legierung eine Achse einer leichten Magnetisierung in einer zu der Filmoberfläche senkrechten Richtung aufweist.

**2.** Film aus einer weichmagnetischen Legierung nach Anspruch 1, bei dem der Stickstoff in dem Film in Richtung der Filmdicke in seiner Zusammensetzung moduliert ist.

**3.** Film aus einer weichmagnetischen Legierung nach Anspruch 2, bei dem der Film aus der weichmagnetischen Legierung aus Nitridschichten einer TMXN-Legierung und aus Nicht-Nitridschichten einer TMX-Legierung besteht, wobei T, M, X und N gemäß Anspruch 1 definiert sind und die Nitridschichten und die Nicht-Nitridschichten wechselweise übereinander angeordnet sind, um den Stickstoff in seiner Zusammensetzung zu modulieren.

**4.** Film aus einer weichmagnetischen Legierung nach einem der vorangehenden Ansprüche, bei dem wenigstens ein durch T dargestelltes Metall Eisen ist.

**5.** Film aus einer weichmagnetischen Legierung nach einem der vorangehenden Ansprüche, der ein nicht-magnetisches Substrat aufweist, auf dem der Film aus der weichmagnetischen Legierung geformt ist, so daß eine Achse einer leichten Magnetisierung senkrecht zu der Filmoberfläche verläuft.

**6.** Magnetkopf (H), der einen magnetischen Film (2a, 2b, 2c) als Teil eines magnetischen Kreises aufweist, wobei der magnetische Film ein Film aus einer weichmagnetischen Legierung, wie in einem der vorangehenden Ansprüche beansprucht, ist.

**7.** Magnetkopf (H) nach Anspruch 6, bei dem der Teil des magnetischen Kreises eine Struktur aufweist, die mehrere weiche, mehrere Filme (2a-2c) aus der weichmagnetischen Legierung und mehrere isolierende Filme (3a, 3b), welche wechselweise übereinander angeordnet sind, hat.

**8.** Magnetkopf (H) nach Anspruch 7, bei dem der Stickstoff in Richtung der Filmdicke in jedem der mehreren Filme (2a-2c) aus der weichmagnetischen Legierung (2a-2c) in seiner Zusammensetzung moduliert ist.

**9.** Magnetkopf (H) gemäß Anspruch 7 oder 8, bei dem jeder der mehreren Filme (2a-2c) aus der weichmagnetischen Legierung auf einem nicht-magnetischen Träger (1a, 1b) gebildet ist und jeder Film (2a-2c) aus der weichmagnetischen Legierung eine Achse einer leichten Magnetisierung in einer zu dem Film senkrechten Richtung aufweist.

10. Magnetkopf (H) nach einem der Ansprüche 8 bis 10, bei dem der Film (2a, 2b, 2c) aus der weichmagnetischen Legierung in solch einer Weise angeordnet ist, daß ein Strom eines Magnetflusses von dem Magnetkopf (H) senkrecht zu der Achse der leichten Magnetisierung verläuft.

11. Magnetischer Dünnfilmkopf, der einen magnetischen Kern, der ein Joch hat, und einen magnetischen Film, der auf dem Kern oder dem Joch in einem Streifenmuster geformt ist, aufweist, wobei der magnetische Film ein Film aus einer weichmagnetischen Legierung, wie in einem der Ansprüche 1 bis 5 beansprucht, ist.

12. Magnetischer Dünnfilmkopf nach Anspruch 11, bei dem der magnetische Film als eine Struktur vorliegt, die mehrere Filme aus der weichmagnetischen Legierung und mehrere isolierende Filme aufweist, welche wechselweise übereinander angeordnet sind.

## Revendications

1. Film en alliage magnétique doux qui comprend une couche d'un alliage fait essentiellement d'une composition moyenne de formule

$$T_aM_bX_cN_d$$

dans laquelle T représente au moins un métal choisi parmi Fe, Co et Ni, M représente au moins un métal choisi parmi Nb, Zr, Ti, Ta, Hf, Cr, Mo, W et Mn, X représente au moins un métalloïde choisi parmi B, Si, Ge et C, N est l'azote, et dans laquelle les coefficients a, b, c et d ont des valeurs, en pourcentage atomique, telles que:

$$65 \leqq a \leqq 93$$
$$0 < b \leqq 20$$
$$0 < c \leqq 20$$
$$1 \leqq d \leqq 20$$
$$5 \leqq b \leqq \ + \ c$$
$$a \ + \ b \ + \ c \ + \ d \ = \ 100$$

ledit film d'alliage magnétique doux ayant un axe de facile aimantation dans une direction perpendiculaire à la surface du film.

2. Film d'alliage magnétique doux selon la revendication 1, dans lequel l'azote dans ledit film est modulé, du point de vue de la composition, dans la direction de l'épaisseur du film.

3. Film d'alliage magnétique doux selon la revendication 2, dans lequel ledit film d'alliage magnétique doux comprend des couches d'alliage avec nitrure TMXN et des couches d'alliage sans nitrure TMX, sachant que T, M, X et N sont tels que définis dans la revendication 1, les couches avec nitrure et les couches sans nitrure étant superposées de façon alternée afin de moduler l'azote du point de vue de la composition.

4. Film d'alliage magnétique doux selon l'une quelconque des précédentes revendications, dans lequel au moins un métal représenté par T est le fer.

5. Film d'alliage magnétique doux selon l'une quelconque des précédentes revendications, qui comprend en outre un substrat non magnétique sur lequel est formé ledit film d'alliage magnétique doux de façon qu'un axe de facile aimantation soit perpendiculaire à la surface du film.

6. Tête magnétique (H) qui comprend un film magnétique (2a, 2b, 2c) en tant que composant d'un circuit magnétique, dans laquelle le film magnétique est un film d'alliage magnétique doux tel que revendiqué dans l'une quelconque des précédentes revendications.

7. Tête magnétique (H) selon la revendication 6, dans laquelle ledit composant du circuit magnétique a une structure comprenant une pluralité desdits films d'alliage magnétique doux (2a-2c) et une pluralité de films isolants (3a, 3b) qui sont superposés de façon alternée.

8. Tête magnétique (H) selon la revendication 7, dans laquelle l'azote est modulée du point de vue de la composition dans la direction de l'épaisseur du film dans chaque film d'alliage magnétique doux de ladite pluralité (2a-2c).

9. Tête magnétique (H) selon la revendication 7 ou 8, dans laquelle chaque film d'alliage magnétique doux de la pluralité (2a-2c) est formé sur un support non magnétique (1a, 1b) et chaque film (2a-2c) d'alliage magnétique doux a un axe de facile aimantation dans une direction perpendiculaire au film.

10. Tête magnétique (H) selon l'une quelconque des revendications 8 à 10, dans laquelle ledit film d'alliage magnétique doux (2a, 2b, 2c) est disposé de telle manière que l'écoulement du flux magnétique provenant de la tête magnétique (H) est perpendiculaire à l'axe de facile aimantation.

11. Tête magnétique à couche mince comprenant un noyau magnétique avec une culasse et un film magnétique formé sur le noyau ou la culasse suivant un motif à bandes, dans laquelle le film magnétique est un film d'alliage magnétique doux tel que revendiqué dans l'une quelconque des revendications 1 à 5.

12. Tête magnétique à couche mince selon la revendication 11 dans laquelle le film magnétique est présent sous la forme d'une structure comprenant une pluralité desdits films d'alliage magnétique doux et une pluralité de films isolants qui sont superposés de façon alternée.

EP 0 442 760 B1

## FIG. 1

## FIG. 2

Fe–Nb–B–N
(THERMALLY TREATED)

Fe–Nb–B–N
(NOT THERMALLY
TREATED)

Fe–Nb–B
(NOT THERMALLY
TREATED)

MAGNETIZATION ($\sigma$)

TEMPERATURE (°C)

# FIG. 3

# FIG. 4

# FIG. 5

16

FIG. 6  PRIOR ART